# EUROPEAN PATENT APPLICATION

(11) **EP 2 682 814 A1**
(43) Date of publication of application: **08.01.2014**
(21) Application number: 12174761.2
(22) Date of filing: 03.07.2012
(51) Int. Cl.: G03B 13/36, H04N 5/232

(54) **Low profile auto focus device and method thereof for an optical imaging system**

(71) Applicant: poLight AS, 3192 Horten (NO)
(72) Inventor: Spatscheck, Thomas, 3145 Tjørne (NO); Craen, Pierre, 4053 Embourg (BE)
(74) Representative: Plougmann & Vingtoft A/S

(57) **Abstract**

The present invention relates to a low profile autofocus lens device (10), and especially to a low profile autofocus lens device that can be added into or added onto a stack of lenses (90-93) of an imaging system providing none to moderate increase of the overall height of the imaging system, and a method of manufacturing a stack of lenses (90-93) with the low profile autofocus lens device (10).

## Description

### FIELD OF THE INVENTION

The present invention relates to a low profile autofocus device, and especially to a low profile autofocus device that can be integrated into or added onto a stack of lenses of an optical imaging system providing none to moderate increase of the overall height of the imaging system, and a method of manufacturing a stack of lenses with a low profile autofocus device.

### BACKGROUND OF THE INVENTION

The worldwide growth in the use of stationary and hand-held electronic devices, such as mobile phones, digital scanning apparatus, video gaming stations, security issues and surveillance devices etc. containing cameras is driving the demand for improvements and developments to existing camera technology. Over 1 billion mobile phones with cameras are sold annually and this amount is growing.

Due to the restrictions in size, speed and performance of existing auto-focus camera-lens technology (for example the Voice Coil Motor, VCM) which dominates the camera phone market, attention has been drawn to utilizing replacement technologies such as a "compact polymer lens" or "polymer lens" for example as described in the European patent EP 2115500.

Another challenge with prior art autofocus systems, when integrating such devices into mobile phones, is that it is usually required several lenses in the system to achieve a certain optical quality and performance as known to a person skilled in the art. At least one of the lenses can for example be moved mechanically back and forth to adjust the focus onto a sensor surface of an imaging system the autofocus system is attached to. The mechanical movement can be controlled by signals applied on a VCM connected to the movable lens. Therefore, the variable heights of the lens system with autofocus possibilities have been regarded as a problematic solution for camera modules used in mobile phones. Generally, this has been regarded as a problem for many Micro Electro Mechanical Systems (MEMS) utilizing optical components and camera chips. Another common challenge with autofocus systems in mobile phones is that the autofocus settling time is relatively long, and therefore it is difficult for example to track moving photo targets.

In prior art the patent EP 2115500 with the title "flexible lens assembly with variable focal length" disclose a lens assembly comprising a flexible lens body 10 inside a cavity bounded by a sidewall 11 and a first transparent cover 13, and a second transparent cover 14, wherein both covers 13, 14 are in contact with respective surfaces of the lens body 10. Piezoelectric elements 12 shapes the first transparent cover 13 and then indirectly the lens body 10 when activated, thereby adjusting the focal length of the lens assembly.

There are some examples of manufactured exemplars of the above referenced flexible lens assembly that are 0.4 mm thick. It is also possible to achieve even smaller exemplars of this design. The range of the movement of the lens body shape, when piezoelectric elements are shaping the body, is in the µm range when adjusting the focus from infinity to for example 10 cm. Therefore, this design is an example of an extremely slim design when utilizing this solution in a camera module for example. Embodiments of the flexible lens assembly of the patent EP 2115500 is sold under the trade name TLens™. An example of embodiment is a TLens™ chip is disclosed on the web page http://www.polight.com/TLens-13.html.

It is also a demand for being able to adapt existing fixed focus lens systems in imaging systems, for example a stack of lenses, to an autofocus system in a simple manner.

It is common in prior art that lens systems or imaging systems comprises three to four or more lenses with an air gap in between, also when the lens system has a fixed focus. These air gaps are usually in the range of 0.5 mm in thickness.

In prior art it is known to utilize the air gaps in a stack of lenses when introducing a tuneable lens system into the stack to avoid increasing the height of the stack of lenses too much. However, the introduction of the tuneable lens may require a custom optical design optimization and is creating some challenges. For example, it is known that none of the lenses used in a stack design are optically perfect embodiments of lenses. There are always some optical errors in a finished stack of lenses that need to be corrected after the assembly of the stack. For example, the focus of the assembled stack of lenses for the infinity distance should be on the image sensor surface. When there is a deviation of this condition, the common practise is to adjust the focal length by adjusting the distance between some of the respective lens bodies in the stack to overcome this fault. When manufacturing a stack of lenses this adjustment is made as a final assembly operation. It is possible to assemble a stack of lenses in a jig that also may be used to support the final postproduction step of adjusting the focus of the assembled stack of lenses. An optical signal can be used together with an imaging system and via the jig a necessary adjustment can be made.

Another challenge when introducing an electrically tuneable lens in a stack of lenses is to provide electric connectivity throughout the stack of lenses for electric control signals providing a tuning of the lens (changing of the focal length). The autofocus device according to the present invention may be located at different positions within the stack of lenses. Further, the electric connectivity can be made regardless of the respective different connectivity conditions that are dependent on the actual location used by the autofocus device within a specific stack of lenses. Usually it is a production requirement that the stack of lenses are fitted to a camera chip in a predefined orientation, for example to be able to connect signal conductors for the electric control signals for the autofocus system to corresponding soldering pads on the camera chip surface, or to another location close to the camera chip providing an electric connection to the camera chip, or any other type of electronic device or function used in the design to provide the corresponding electric control signals, for example from an imaging processor. This can be a challenge when for example a barrel is used to support the stack of lenses and is for example turned to adjust the length of the stack as the final assembly step as described above. The adjustment movement or change of the length of the lens barrel, or any other type of support for the stack of lenses, can harm the necessary electric contacts within the barrel itself, the signal conductors may be lengthened or shortened too much, and the conductors for the electric control signals may be moved away from a preferred position relative to corresponding soldering pads within the barrel itself and also for connection of signal conductors to soldering pads located outside the lens barrel as discussed above. Soldering pads within a lens barrel itself can also be a problem. For example, if an adjustable lens like a TLens™ is used there must be provided an electric signal connection within the barrel itself. If for example an adjustment of the length of a barrel is performed, these connections can also be harmed. If the adjustment is performed by turning a part of the barrel relative to another part, it is obvious that the relative position between signal pads for an autofocus lens and soldering pads for signals from an external image processor for example will come out of alignment regardless of the turning direction of the barrel.

According to an aspect of the present invention, an autofocus device comprising for example a TLens™ can be used when manufacturing a stack of lenses for use for example in a camera module for a mobile phone, wherein the autofocus device according to the present invention may be added on top of the stack of lenses, in a bottom position of the stack or somewhere else, for example in the middle of the stack of lenses.

Hence, an improved autofocus lens system would be advantageous, and in particular a more efficient and flexible and/or thinner system for autofocus systems would be advantageous that at the same time is efficient to manufacture and assemble into a stack of lenses.

### OBJECT OF THE INVENTION

It is a further object of the present invention to provide an alternative to the prior art.

In particular, it may be seen as an object of the present invention to provide an autofocus device that solves the above mentioned problems of the prior art with an electric driven autofocus device that can be integrated into a stack of lenses at any chosen location, wherein the autofocus device allow post production adjustments of the stack of lenses without any damage being made to electric contacts or signal conductors of the autofocus device.

### SUMMARY OF THE INVENTION

Thus, the above described object and several other objects are intended to be obtained in a first aspect of the invention by providing an autofocus device comprising for example a TLens™ autofocus lens, wherein an adjustable electric contact system of the autofocus device may facilitate optical postproduction adjustments of a stack of lenses comprising the autofocus device.

Another aspect of the present invention is to manufacture a stack of lenses, for example as a round cylinder shaped barrel, where at least a respective upper part and a respective lower part of the barrel, which may be interconnected through a coupling with fine threads, makes it possible to turn at least one part of the barrel relative to the other part, thereby moving the respective upper part and respective lower part of the barrel towards each other, or apart from each other, wherein an adjustable electric contact system provides electric signal contacts without making any damage or loss of connectivity of any electric contacts or signals of an autofocus device used in the assembled stack of lenses independent of which location in the stack of lenses that is used for the electric signal driven autofocus device.

Different aspects of the present invention may each be combined with any of the other aspects. These and other aspects of the invention will be apparent from and elucidated with reference to the embodiments described hereinafter.

### BRIEF DESCRIPTION OF THE FIGURES

The autofocus device according to the present invention will now be described in more detail with reference to the accompanying figures. The accompanying figures illustrates an example of embodiment of the present invention and is not to be construed as being limiting to other possible embodiments falling within the scope of the attached claim set.
Figure 1a illustrates an example of positioning an autofocus device according to the present invention in a stack of lenses.
Figure 1b illustrates another example of positioning an autofocus device according to the present invention in a stack of lenses.
Figure 2a illustrates a split view of a stack of lenses with an autofocus device according to the present invention located in a position just after the front lens of the stack.
Figure 2b illustrates an assembled view of the example depicted in figure 2a.
Figure 3 illustrates a cross section view in perspective of the assembled example of embodiment depicted in figure 2b.
Figure 4 illustrate a top view of an example of embodiment of the present invention.
Figure 5 illustrate another top view of the example of embodiment depicted in figure 4.
Figure 6 illustrate another top view of the example of embodiment depicted in figure 4.
Figure 7 illustrate an example of an electric gliding contact utilized in the example of embodiment illustrated in figure 4.
Figure 8 illustrates an example of a TLens™ chip top surface.
Figure 9 illustrate a cross section view of a lens barrel of an example of embodiment of the present invention as depicted in figure 4.

### DETAILED DESCRIPTION OF AN EMBODIMENT

Although the present invention has been described in connection with specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

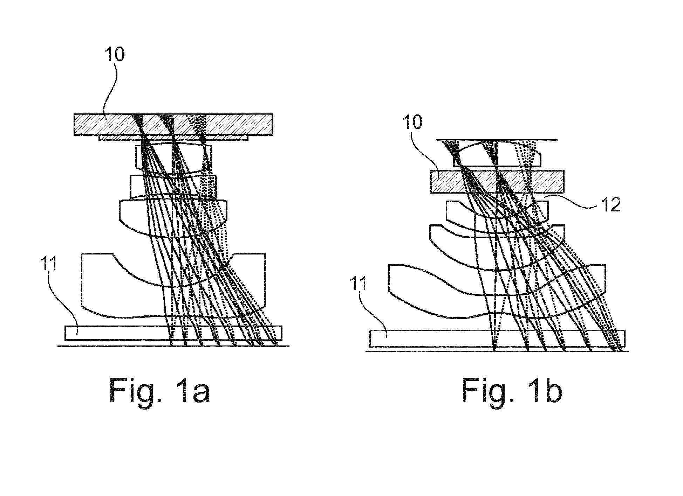

Figure 1a illustrates how an example of embodiment of the autofocus device 10 according the present invention can be added on top of a stack of lenses. Figure 1b illustrates how air gap 12 in the stack can be used for locating the autofocus device 10 within the stack. The add-on solution in figure 1a may provide some increase in the height of the stack while the add-in solution in figure 1b may not add any increase to the total height of the stack of lenses at all. When the autofocus device 10 according to the present invention is located close to a surface 11 of an image sensor chip in a camera module, it is necessary that the autofocus device according to the present invention need higher optical power compared with for example an auto focus device located in the air gap 12 in figure 1b to achieve the same range of focus adjustments. Further, the diameter of an optical aperture of the autofocus device should be of the same magnitude as the diameter of the sensor surface 11 of the camera module.

Table 1 depicts some non-limiting examples of respective dimensions of a TLens™ chip used in an autofocus device according to the present invention when the autofocus device is used as an add-on device, i.e. added at the top of a stack of lenses, or below a top located lens of the stack as an add-in device, i.e. being inserted between lenses in the stack of lenses, and when located at the bottom of the stack above a sensor surface 11 of a camera chip. The dimensions are given in mm.

**Table 1:**

| Location in stack of lenses | Aperture size of TLens™ chip | Die size of TLens™ chip | Added height of stack of lenses |
|---|---|---|---|
| Add on | 1.55 | 3.2 | 0.5 |
| Add in (After first lens) | 1.3 | 2.9 | ∼00 |
| Add in (Close to sensor) | > 5 | > 8 | 00 |

The actual chosen location is a design consideration that usually is a tradeoff between different requirements for the physical shaping and size of the lens stack and the use of the lens stack in an imaging system. If the embodiment of the autofocus device have a variable focus lens like a TLens™, the manufacturer of the TLens™ can for example provide different optical power, sizes etc. (ref. http://www.polight.com/TLens-13.html).

When designing a stack of lenses it is known in prior art that one of the most important or critical parameters in a stack of lenses is the decenter possibility between the front lens and the second lens in the stack. Therefore, when using a variable focus length lens, for example as an add-on device it is an advantage if the lens body itself is thin. A thin lens will assure that the distance between the first and second lens is small and will therefore not increase the decenter sensitivity between the first two lenses. A TLens™ chip has this quality and when assembling lenses into a stack, for example as a barrel design, the requirements of concentricity of the barrel design can be more easily met when using a TLens™ chip.

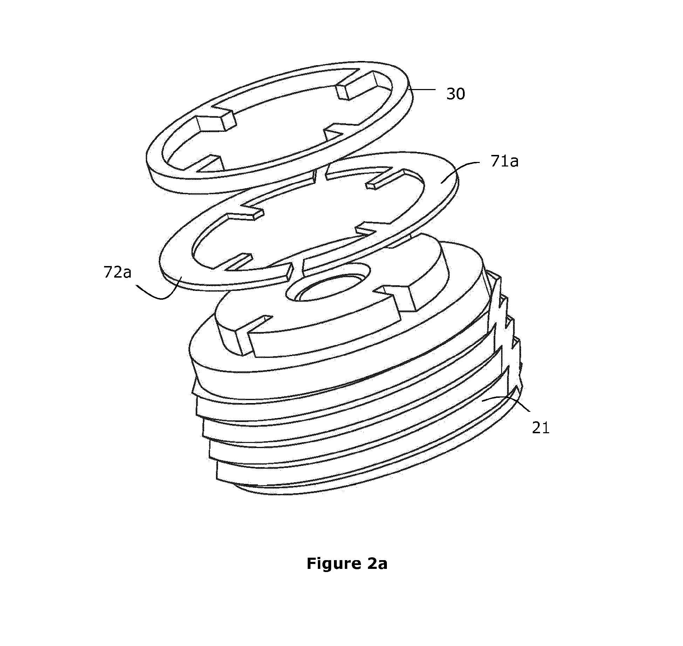

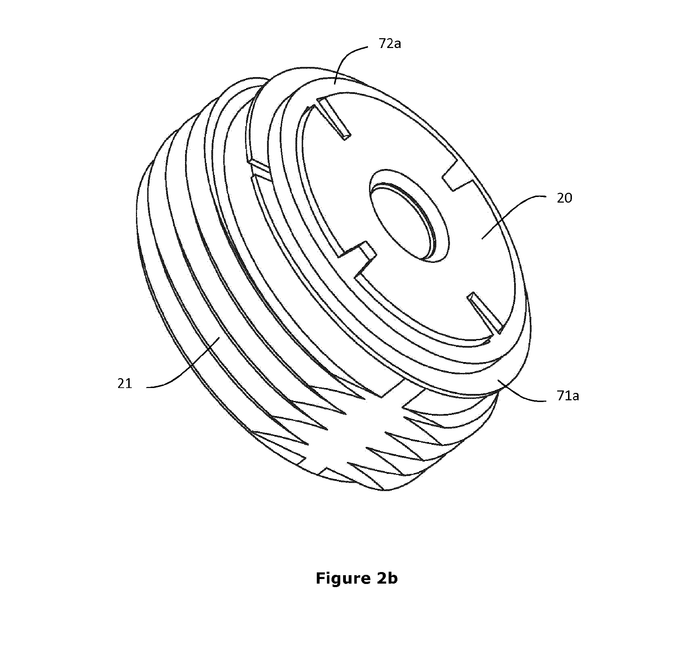

Figure 2a illustrates a split view of a lens barrel 21 with threads on the outside wall of the barrel. Ring shaped electrodes 71a and 72a may be assembled onto the lens barrel 21 and be fastened with a ring 30. Figure 2b illustrates the assembled lens barrel 21. The threaded assembly can then be inserted into an outer cylinder with threads that is positioned over a camera image sensor surface. The threaded interface between the barrel 21 and the outer cylinder gives an opportunity to adjust the distance between the lens barrel and the camera image sensor surface. This adjustment must not be confused with adjustments inside the lens barrel, performed to overcome or compensate lens errors of the stack of lenses.

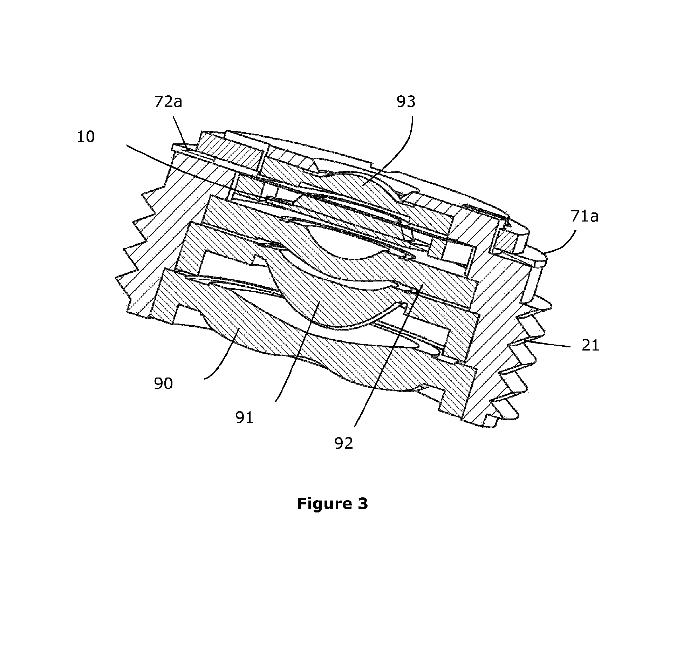

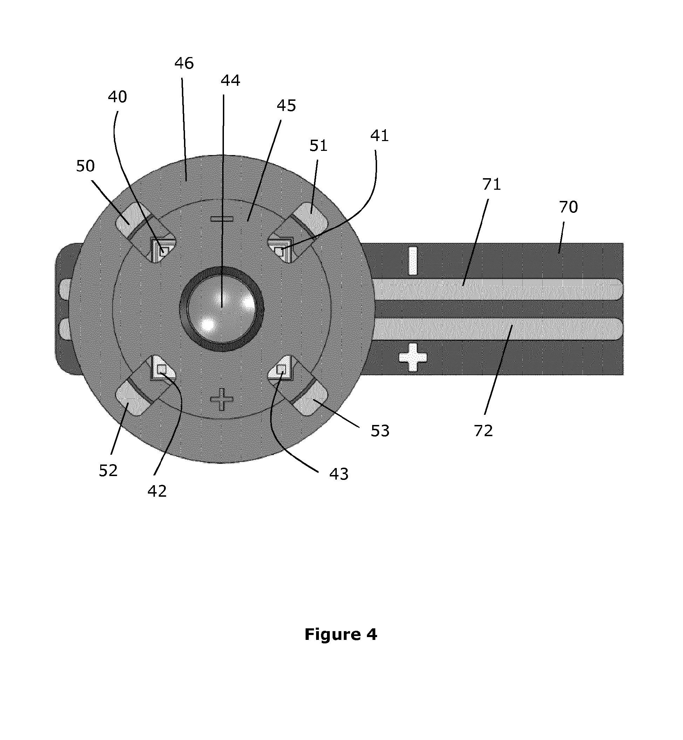

Figure 3 depict a cross sectional view of a lens barrel as illustrated in figure 2a and figure 2b, wherein an autofocus device 10, for example as disclosed in figure 4, is inserted between a fixed focus top lens 93 and a fixed focus lens 92 originally being lens number two from the top. The other fixed focus lenses 90 and 91 provides further optical power to the assembled lens barrel 21. Ring shaped electrodes 71a and 72a are partly visible and accessible from the outside of the barrel 21. These electrodes are internally arranged in the assembled lens barrel 21 in contact with respective positive and negative piezoelectric electrodes of the auto focus lens 10. Activation of the piezoelectric actuators provides a change of focal length. When a postproduction adjustment step is performed by for example turning a part of the lens barrel 21 relative to another part of the lens barrel 21, the ring shaped form of the electrodes 71a and 72a makes it possible to keep contact between these electrodes and electrodes of the autofocus lens if the contacting surface is respectively located above each other along the shape of the ring shaped electrodes 71a and 72a. However, if distances between these contacting surfaces are increased a loss of contact may occur. Further, since there are at least two polarities of the signals a turning too far may cause a short circuit condition.

Examples of actual adjustable connections according to the present invention are discussed below. In the example depicted in figure 3, the electrodes may be soldered manually with electric signal wires to contact pads being signal output pads of an autofocus controller (not shown) for example. However, in a high speed production line manufacturing cameras for mobile phones, a completely automated production is preferred.

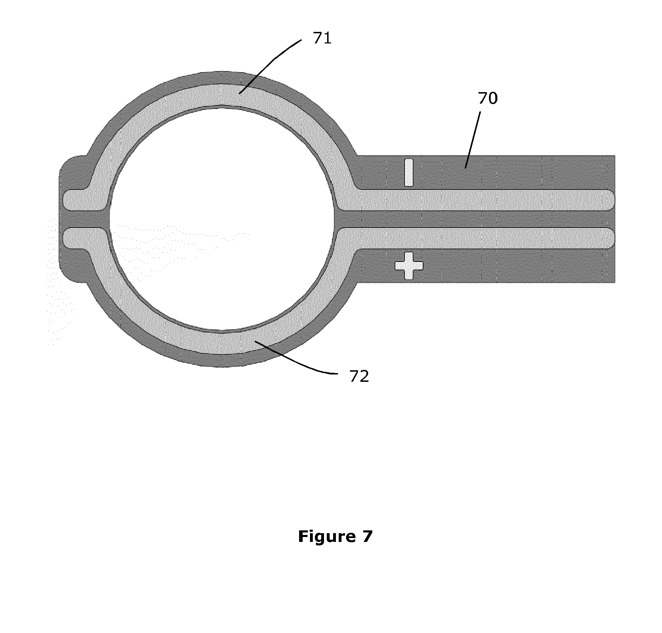

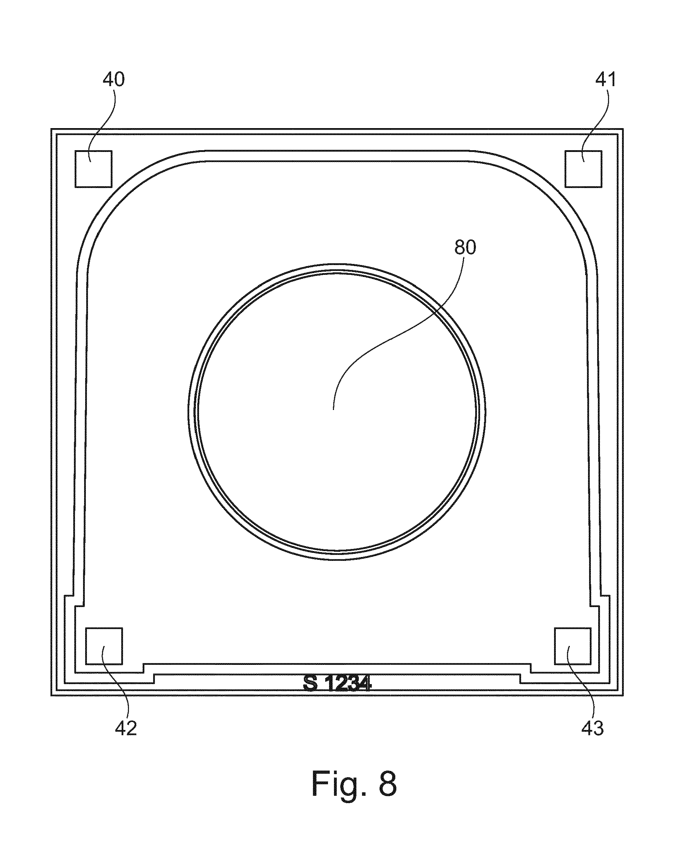

Figure 4 illustrates an example of embodiment of an autofocus device according to the present invention comprising a TLens™ chip, as depicted in figure 8, having an adjustable electric contact system. The square configuration of the TLens™ chip as depicted in figure 8 comprises a flexible lens body in the middle inside the aperture (opening) 80. The piezoelectric actuators are disposed on the surface of the lens body around the perimeter of the lens body, and the contact pads 40, 41, 42, 43 for the piezoelectric electrodes may be located in the four corners of the TLens™ chip as depicted in figure 8. For example, in the corners with the reference numbers 40, 41 the contact pads located here may be for the negative piezoelectric signal electrode while the other corners 42, 43 may be the contact pads for the positive piezoelectric signal electrode, or vice versa. The example of embodiment in figure 4 comprises also a flexible print 70 with one negative signal connector 71 and a positive signal connector 72. Therefore, at least one of the contact pads 40, 41 of the autofocus lens 10 should be in contact with the negative signal connector 71 while at least one of the contact pads 42, 43 should be in contact with the positive signal connector 72. In figure 7 there is depicted an example of the flexible print 70 having two isolated printed circuit halves 71, 72 arranged in a ring shaped form with an extension that continuous out as a tail like elongated part of the flexible print. This elongated part may be soldered to external signal contact soldering pads.

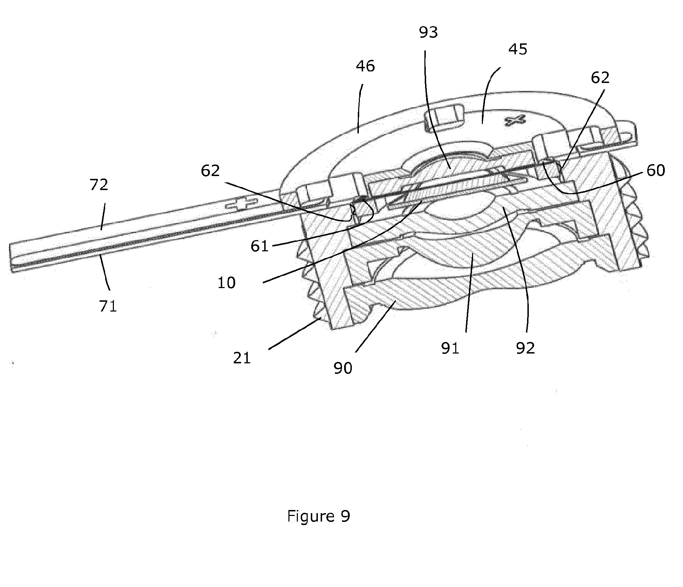

The lens body of the TLens™ chip used in the example above of the embodiment is visible in figure 4 in the center of the autofocus device with the reference number 44. The square TLens™ chip as depicted in figure 8 is located and sandwiched between an upper cylinder shaped support body (for example a disc shaped body) 45 and a bottom cylinder shaped support body (for example a disc shaped body) (not shown).The bottom cylinder shaped support body may be a lens barrel 21 as depicted in figure 3 and figure 9 for example. The cylinder shaped respective upper support body 45 and the bottom cylinder shaped support body 21 may be inserted or be connected to an outer cylinder shaped barrel 46 that extends at least from the respective cylinder shaped upper support body 45 down to the cylinder shaped bottom support body 21. If the bottom cylinder shaped support body is a lens barrel, the length of the bottom support body is dictated by the number of lenses in the stack the barrel supports. The junction between the bottom cylinder shaped support body 21 and the cylinder shaped barrel 46 may be as a threaded connection 62 as depicted in figure 9. The bottom cylinder shaped body 21 may have threads on the outside of the cylinder shaped support body 21 that can be screwed inside a corresponding threaded part of the cylinder shaped barrel 45. The upper cylinder shaped support body 45 may be fixed to the outer cylinder shaped barrel 46. In this manner it is possible to turn the outer cylinder shaped barrel 46 either to the left or right and this movement will then move the upper and lower part of the autofocus device relative towards each other or relative apart from each other.

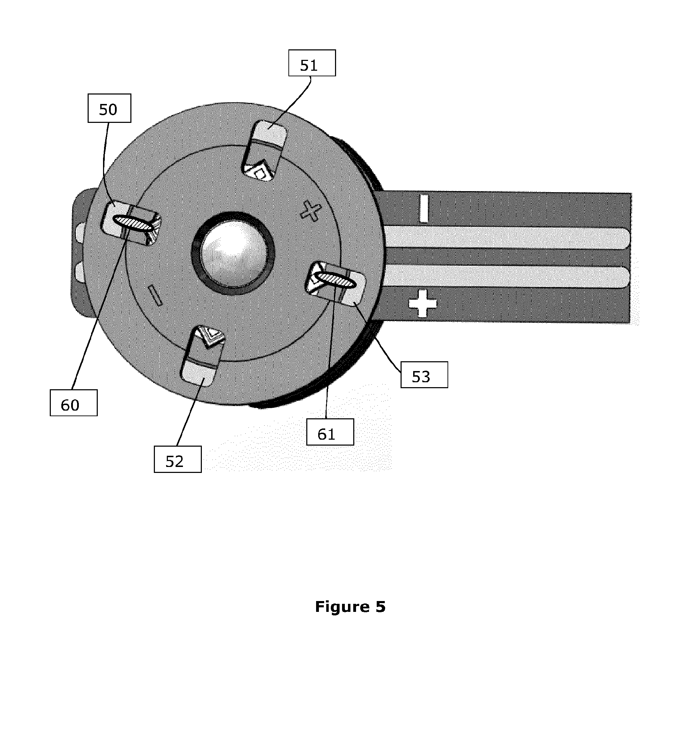

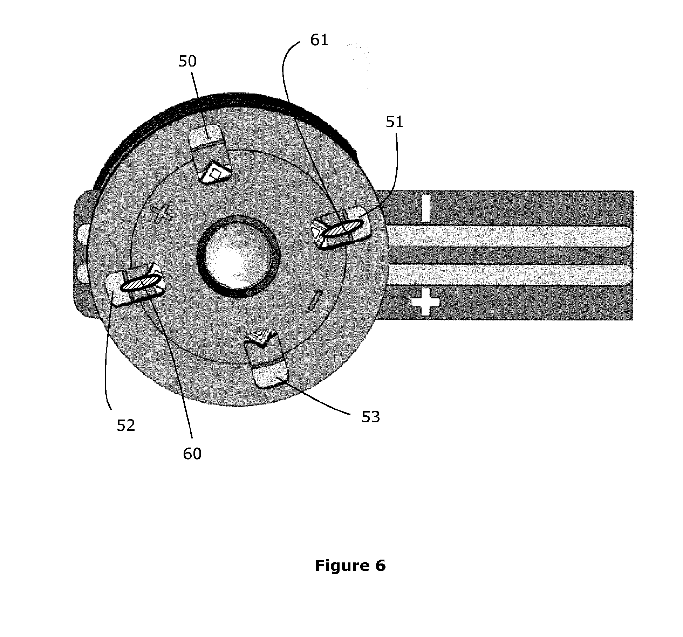

According to an aspect of the present invention, the electric contact between the respective contact pads 40, 41, 42, 43 of the TLens™ chip and the flexi print halves 71, 72 may be established after the postproduction step is finished. During the adjustment step there is no need for a functional electric contact between the respective contact pads 40, 41, 42, 43 and corresponding flexi print halves 71, 72 during the adjustment step. Instead, it is possible to establish the electric contact between the printed electric conductors 71, 72 of the flexible print 70 and the corners 40, 41, 42 and 43 of the TLens™ chip after the optical adjustment is finished, for example by applying an electric conducting glue in the openings 50, 51, 52, 53 in the upper support body 45 and the outer cylinder shaped barrel 46 located above the four corners 40, 41, 42, 43 of the TLens™ chip. The glue will fall through the openings and bond the four corners of the TLens™ chip to the respective two ring shaped halves 71 and 72 on the flexible print 70. This will also provide a fixation of the postproduction adjustment. With reference to figure 5 and figure 6, the turning direction of the autofocus adjustment determines which one which one of the openings 50, 51, 52, 53 that will be used when gluing. If the turning direction is with the clock direction from a starting point as disclosed in figure 4, figure 5 disclose which openings to use when applying the electric conducting glue 60, 61. If the turning is opposite the direction of the clock, figure 6 depicts which openings to use.

In another example of embodiment there may be electric contact pads in the openings 50,51,52,53 on the upper cylinder shaped support body surface. The contact pads may be in contact with internal (not shown) conductors that are in contact with spring loaded ball shaped bodies rolling across the ring shaped halves 71, 71 of the flexi print 70. This is providing a gliding contact system that maintains electric contact for the electric control signals for the autofocus lens also when for example the upper cylinder shaped support body is turned either way. In view of this aspect of the present invention, it is possible to have a manual adjustment of focus as well as an autofocus function for the lens stack. The connection of the necessary electric control signals for the autofocus lens could then be arranged as slightly coiled up electric wires between the contact pads on the camera chip for example and soldering pads on the outside of the cylinder shaped support body supporting two halves of a ring shaped print as disclosed above.

In figure 5 and 6, the example of embodiment makes it possible to turn the cylinders relative to each other between zero and ±120° which represent a movement of up to ±165 µm of displacement.

In the example depicted in figure 4, 5 and 6 it may be a groove or similar arrangement in for example the cylinder shaped bottom body that may restrict the movement of the cylinder shaped barrel 46 back and forth between -120° and +120°, thereby stopping a turning of the barrel 46 outside this range that otherwise might cause a short circuit condition.

It is an aspect of the present invention that an adjustable electrical contact system comprises at least two contacting surfaces 71, 72, that are fixed to at least a lower support body 21, thereby providing a fixed orientation of an extension of the contacting surfaces 71, 72 relative to a sensor surface 11, thereby enabling an automatic soldering of the extension of the contacting surfaces 71, 72 to corresponding soldering pads associated with corresponding controlling signals for the autofocus device according to the present invention. Further, the adjustable contact system may comprise using conducting glue after the post production adjustment has been performed to establish electric contact in the adjustable contact system. Alternatively, spring loaded ball shaped contacts may be used.

It is within the scope of the present invention to be able to use any form of contact system as long as the features of the adjustable contact system according to the present invention is maintained.

As stated above, it is seldom that lenses used in a stack of lenses are perfect lenses; i.e. are manufactured without any form of lens defects. For example, deviation or an uncertainty of a lens parameter like optical power etc. is common. Generally, errors in lenses are related to two different aspects of optical lenses, color errors (respective colors have different refraction indexes, for example) and geometrical errors (for example the lens aperture is not a perfect sphere part). As stated above, the postproduction step described above do solve many of these issues. However, some electrical adjustable autofocus lenses, for example like the TLens™ referenced above permit a shaping of the lens surface that is not uniform, i.e. the shape can be skewed, wherein the asymmetric shaping is controllable. This property can also be used to correct lens errors. It is known how to correct geometrical lens errors in human eyes with nonsymmetrical glasses in for example reading glasses. Therefore it is within the scope of the present invention to be able to provide a voltage biasing of the electric control signals controlling the autofocus of the autofocus device according to the present invention. The actual controlling signal levels applied during an autofocus operation in a camera using a stack of lenses according to the present invention may then be superimposed on the biasing voltage levels of the respective control signals. In this manner the present invention may provide two levels of postproduction adjustments, one level comprising a mechanical compensation and a second level comprising identifying bias voltages that provide a further improvement of lens errors in a stack of lenses.

When assembling a lens barrel with an autofocus device according to the present invention in a lens stack, the other respective fixed focus lenses of the lens stack can be assembled inside for example Plexiglas tubes as known to a person skilled in the art. Such tubes with additional lenses can then be glued and centered on top surface of the upper cylinder shaped support body 45 and/or glued centered to the bottom cylinder shaped support body surface thereby aligning all lenses including the TLens™ lens body along the optical axis of the lens stack. The number of lenses in the respective upper glued Plexiglas tube and/or the bottom glued Plexiglas can be variable and be dependent on which location in the stack that is used for the autofocus device according to the present invention. When the assembly (gluing) is finished a postproduction adjustment can be made by adjusting for example the distance between the upper and lower cylinder shaped support bodies in the example of embodiment disclosed above. The assembly steps may be performed with the help of a jig as discussed above.

It is within the scope of the present invention that any shape of the support bodies of the autofocus device according to the present invention may be used. It is further within the scope of the present invention that any arrangement that enable an assembly of other lenses for use in a stack of lenses may be utilized. It is further within the scope of the present invention that any arrangement that enable a postproduction adjustment as disclosed above may be used in any embodiment of the present invention.

When manufacturing a stack of lenses, for example when utilizing a jig, variable voltage sources can be connected to respective control signal inputs of the autofocus device, and a correct set of bias voltages can be identified and recorded, for example through an iterative process. An initial estimated biasing may be applied on the autofocus device, and by adjusting the levels iteratively between the respective control signals a best set of bias voltages may be recorded. It is worthwhile to understand that a lens system that is to be used with different kind of light, for example daylight and infrared light may need a different compensation dependent on the kind of light (i.e. wavelength) that is used. It is within the scope of the present invention that different sets of bias voltages may be recorded and used as biasing voltages in examples of embodiments of the present invention.

When such sets of bias voltages have been identified, these bias levels can be programmed into an imaging processor that controls the autofocus system and corresponding algorithm for identifying the focus distance of the system. When there are several sets of biasing levels, the condition for using a specific set of bias voltages can be user selected through an interactive display on a camera as known to a person skilled in the art.

## Claims

1. An autofocus device comprising at least one adjustable lens body (10), wherein electric control signals applied on the autofocus device provides control of the at least one adjustable lens body (10), thereby adjusting the focus length of the autofocus device, wherein the autofocus device is adapted to be used in a stack of lenses of an imaging system, **characterized in that** the autofocus device have at least an upper part (45, 46) and a lower part (21), wherein the upper part (45, 46) and lower part (21) are connected via a junction (62) permitting postproduction adjustments of a distance between the upper part (45) and the respective lower part (21), wherein the adjustment may provide either an increase or a shortening of the distance between the upper part (45) and the respective lower part (21), the autofocus device is fixed to either the upper part (45) or respective lower part (21), the electric control signals for the autofocus device are connected to the autofocus device via an adjustable electric contact system.

2. The autofocus device according to claim 1, wherein the at least one adjustable lens body (10) is a TLens™.

3. The autofocus device according to claim 1, wherein the upper part of the autofocus device is a cylinder shaped support body (45), wherein a bottom surface of the upper support body (45) comprises a cutout fitted to support and keep the adjustable lens body (10) in a centered position in the upper support body (45).

4. The autofocus device according to claim 1, wherein the lower part is a cylinder shaped support body (21), wherein a top surface of the cylinder shaped support body (21) comprises a cutout fitted to support and keep the adjustable electric contact system centered in the lower cylinder shaped support body (21).

5. The autofocus device according to claim 5, wherein the adjustable contact system comprises a ring shaped flexible printed circuit board (70) with at least two from each other isolated electric conductors (71, 72).

6. The autofocus device according to claim 6, wherein the ring shaped flexible printed circuit board (70) has an elongated tail like extension supporting extensions of the at least two from each other isolated electric conductors (71, 72) to an end of the elongated tail like extension.

7. The autofocus device according to claim 1, the junction between the upper part (45) and the lower part (21) comprises a threaded junction (62).

8. The autofocus device according to claim 3 or 4, wherein the lower part (21) supports the at least one adjustable lens (10) while the upper part (45) supports the adjustable electric contact system.

9. A method for manufacturing a stack of lenses comprising the autofocus device according to claim 1 to 8, comprising:
selecting a first number of lenses to be assembled into a first part (45) of the stack of lenses,
selecting a second number of lenses to be assembled into a second part (21) of the stack of lenses,
adding the first part of the stack of lenses centered to a first surface of the autofocus device,
adding the second part of the stack of lenses centered to a second surface being located opposite to the first surface of the autofocus device,
performing a postproduction adjustment of the total assembled stack of lenses by adjusting a distance between the upper part (45) and respectively lower part (21) of by adjusting an internal distance inside the autofocus device.

10. The method according to claim 9, wherein the step of performing the postproduction adjustment of the assembled stack of lenses comprises using electric conducting glue (60, 61) to establish electric contact between electric conductors (71, 72) of the autofocus device and electric conductors of the at least one adjustable lens (10).

11. The method according to claim 9, wherein the step of performing the postproduction adjustment comprises identifying and recording a set, or a plurality of sets, of biasing voltages that can be used to provide a further adjustment of the stack of lenses, wherein the recorded set or recorded sets of biasing voltages is used to program an imaging processor to be used to provide the biased electric control signals for the autofocus device.
